# FASCICULE DE BREVET EUROPEEN

(11) **EP 2 808 199 B1**
(45) Date de publication et mention de la délivrance du brevet: **13.06.2018**
(21) Numéro de dépôt: 14166565.3
(22) Date de dépôt: 30.04.2014
(51) Int. Cl.: B60N 2/24, B60N 2/30, B60N 2/015, B60N 2/02

(54) **Siège pliable pour cabine de véhicule comportant une pluralité d'axes d'articulation**
Klappsitz für Fahrzeugkabine, der eine Vielzahl von Gelenkachsen umfasst
Folding seat for a vehicle cabin comprising a plurality of hinge pins

(30) Priorité: 06.05.2013 FR 1354138
(43) Date de publication de la demande: 03.12.2014
(73) Titulaire: Gruau Laval, 53940 Saint-Berthevin (FR)
(72) Inventeur: Boscher, David, 35130 La Guerche de Bretagne (FR)
(74) Mandataire: Vidon Brevets & Stratégie

(56) Documents cités:
- EP-A2- 2 127 940
- DE-A1-102007 001 522
- DE-B3- 10 317 314
- FR-A1- 2 663 270
- FR-A1- 2 838 689

## Description

### 1. Domaine de l'invention

L'invention concerne un siège pour cabine équipant un véhicule. L'invention s'applique notamment dans le cas où le siège est articulé et permet de passer d'une position assise et une position pliée via des axes d'articulation.

### 2. Art antérieur

De nos jours, les cabines de véhicules sont équipées d'un ou plusieurs sièges ou banquettes à la fois confortables et disposant de dispositifs de sécurité telles que des ceintures et des repose-têtes. Dans le domaine des véhicules particuliers et des véhicules utilitaires, il est intéressant de disposer de modularité afin d'adapter le volume utile en fonction des besoins, ce volume pouvant être réservé suivant la demande au transport de passagers ou de marchandises. Idéalement, le nombre de places est fonction du nombre de passagers et les sièges inoccupés peuvent être utilisés pour le transport de marchandises. Sur certain véhicule, les sièges inoccupés peuvent être enlevés, le volume ainsi libéré est utilisable pour le transport de marchandises.

La présente invention concerne un modèle de siège pliable qui reste fixé dans la cabine mais pouvant se replier afin de libérer de la place pour le transport des marchandises.

Le brevet d'invention FR 2 845 954 déposée par la demanderesse concerne un dispositif qui combine le repliage d'une banquette arrière pour le transport occasionnel de passagers dans un véhicule comprenant un habitacle doté d'un poste de pilotage et d'un volume normalement dédié au stockage d'objets ou marchandises, et la mise en place automatique d'un élément de protection du pilote et du ou desdits passagers, autorisant ainsi l'agrandissement aisé de la zone de chargement du véhicule, en toute sécurité, sans gêner la visibilité arrière.

Le repliage d'une banquette arrière de véhicule, dans la position agrandissement de la zone de chargement, est traditionnellement effectué par des moyens simples entraînant, soit la suppression dans ladite position de la protection exercée par l'élément généralement ajouré mis en place à cet effet auparavant lorsque ladite banquette est installée pour que les passagers s'y assoient, soit la suppression totale de la visibilité arrière lorsque le principe de repliage consiste à manoeuvrer le dossier de ladite banquette pour le placer approximativement à la verticale de l'assise rabattue derrière des dossiers de sièges avant.

La manipulation d'une banquette repliable dans une enceinte, notamment une cabine de véhicule utilitaire, définissant par ce biais deux volumes variables, dont un volume dédié au chargement et un volume à usage d'habitacle, est traditionnellement effectuée en plusieurs étapes et sans assistance facilitant l'ergonomie de fonctionnement, soit de l'extérieur, soit de l'intérieur du véhicule.

La résistance mécanique d'une banquette repliable à des efforts importants, assurant par la même la sécurité des utilisateurs occasionnels, est traditionnellement réalisée par un système de verrouillage qui fait office à la fois de simple crochetage dans le cas d'une utilisation dite normale, et également de verrouillage dans le cas d'une reprise d'efforts importants consécutive, par exemple, à un tir de ceinture.

La demande décrite ci-dessus concerne une banquette qui dispose d'une liaison coulissante au plafond et de cinq axes de rotation. Une fois replié, les éléments de la banquette sont en position verticale et se plaque contre les sièges avant libérant ainsi un grand espace à l'arrière. Il s'avère que la liaison coulissante au plafond de la cabine est fragile et peut se coincer. De plus, si un choc vient à tordre le rail au plafond, c'est l'ensemble de la banquette qui ne peut plus se replier, et sur toute la largeur du véhicule, la place qui devrait être libérée, n'est pas disponible.

Le document DE 10 2007 001522 - FAURECIA publié le 12 juillet 2007 décrit une siège pour voiture monté sur deux paires de bielles articulées sur des axes de rotation, deux à l'avant et deux à l'arrière. Le siège peut ainsi s'avancer en faisant pivoter les quatre bielles et en même temps basculer vers l'avant. Ce siège à la cinétique complexe et fragile n'empêche pas des objets de passer par dessus risquant ainsi de blesser des passagers.

Le document FR 2 663 270 - DURISOTTI publié le 20 Décembre 1991 et correspondant au préambule de la revendication indépendante 1 de produit décrit un siège pour véhicule automobile dont le repose-tête est articulé au plafond de la cabine par un premier axe de rotation. L'extrémité avant de l'assise du siège est directement fixée au plancher du véhicule par un second axe de rotation. Le basculement vers l'avant de l'assise ne permet pas de dégager une place importante pour le chargement à l'arrière de ce siège.

### 3. Objectifs de l'invention

La présente invention propose un nouveau modèle de siège équipant une cabine qui ne présente pas les inconvénients décrits ci-dessus.

### 4. Exposé de l'invention

En effet, selon un aspect fonctionnel, l'invention (qui est définie par les caractéristiques techniques de la revendication indépendante 1 de produit et par les étapes décrites dans la revendication indépendante 17 de procédé) concerne un siège articulé disposé dans une enceinte, telle qu'une cabine de véhicule utilitaire, fixé sur le sol de ladite enceinte. Le siège comporte au moins un support arrière se prolongeant vers le haut par un dossier et supportant une assise mobile, le support arrière reposant sur le sol de l'enceinte lorsque le siège est en position assise, une bielle de connexion articulée avec l'extrémité inférieure du support arrière par un premier axe d'articulation, l'extrémité avant de la bielle de connexion étant articulée avec le sol de l'enceinte par un second axe d'articulation fixée sur l'extrémité avant permettant à ladite bielle de connexion de se soulever par l'arrière et de basculer vers l'avant lors du mouvement de pliage du siège. Le siège comporte un repose tête articulé dans son extrémité inférieure avec le dossier par un troisième axe d'articulation, ledit repose tête étant articulé dans son extrémité supérieure par un quatrième axe d'articulation fixé au plafond de ladite enceinte.

De cette manière, le mouvement de pliage est uniforme et peut s'effectuer en un seul mouvement de la main dans une direction. En position pliée, le siège formant cloison occupe une place réduite et libère une place importante pour le chargement. Le siège possède des articulations qui ne sont pas combinées à des mouvements d'un type différent, transversaux par exemple, de telles combinaisons entrainant souvent un blocage.

Selon un mode particulier de réalisation, l'assise mobile est également supportée par au moins un support avant fixé sur ladite bielle de connexion, l'assise mobile est articulée avec le support arrière par un cinquième axe d'articulation et l'assise avec le support avant par un sixième axe d'articulation, le support avant est articulé avec la bielle de connexion par un septième et dernier axe d'articulation situé entre le premier axe d'articulation et le second axe d'articulation. De cette manière, en pliant la cloison, l'assise et le dossier du siège se positionne dans la position pliée.

Selon un mode particulier de réalisation, la bielle de connexion repose sur le fond plat de l'enceinte, lorsque ledit siège se trouve en position assise. De cette manière, le poids du siège se trouve mieux réparti sur le sol de la cabine du véhicule.

Selon un mode particulier de réalisation, le dossier comporte une surface transparente, une partie au moins de cette surface transparente est situé sur l'axe entre le rétroviseur central et la vitre arrière du véhicule, lorsque le siège est en position pliée. De cette manière, le conducteur peut voir derrière son véhicule lorsque le siège est plié. Selon un autre mode particulier de réalisation, le repose tête comporte une surface transparente, une partie au moins de cette surface transparente étant situé sur l'axe entre le rétroviseur central et la vitre arrière du véhicule, lorsque le siège est en position assise. De cette manière, le conducteur peut voir derrière son véhicule lorsque le siège est en position assise.

Selon un mode particulier de réalisation, le siège comporte un moyen d'assistance pour faciliter le pliage du siège, ce moyen exerce une force destinée à rapprocher l'axe articulant le support arrière et la bielle de connexion, et l'axe articulant l'assise mobile et le support avant. De cette manière, le siège peut être facilement plié.

Selon un mode particulier de réalisation, le moyen d'assistance exerce une force pour basculer le repose tête vers l'avant permettant ainsi de le rapprocher du plafond de l'enceinte.

Selon un mode particulier de réalisation, le siège comporte un moyen d'assistance motorisé destiné à modifier la position des articulations pour placer le siège dans des positions assises et pliées. De cette manière, en activant un bouton, le siège est automatiquement mis en position pliée ou assise. Selon un mode particulier de réalisation, ce moyen d'assistance motorisé agit sur un axe pour animer en rotation le repose tête au niveau du plafond de l'enceinte. De cette manière, la motorisation n'agit que sur un seul axe d'articulation et la motorisation est facile à mettre en oeuvre.

Selon un mode particulier de réalisation, le dossier du siège dispose d'au moins deux inclinaisons en position assise, la variation d'inclinaison s'effectue à l'aide d'un verrouillage par cran bloquant la rotation de l'axe articulant le repose tête et le dossier. De cette manière, le siège dispose d'au moins une position confort.

Selon un mode particulier de réalisation, la bielle de connexion forme un plan s'étendant sur toute la largeur du siège et constitue un plancher lorsque le siège est en position assise. De cette manière, la personne assise pose ses pieds sur un plancher qui n'est pas en contact avec le chargement disposé en partie arrière du véhicule.

Selon un mode particulier de réalisation, l'ensemble formé par le repose tête et le support arrière constitue une première cloison séparant l'enceinte en deux parties lorsque le siège est en position assise et l'ensemble formé par le support arrière et la bielle de connexion constitue une seconde cloison séparant l'enceinte en deux parties lorsque le siège est en position pliée. De cette manière, le volume dédié au chargement et le volume à usage d'habitacle sont parfaitement séparés par une cloison solide, cette cloison peut être dotée d'équipements divers tels que des tiroirs, des placards, une penderie, du coté de l'habitacle.

Selon un mode particulier de réalisation, le repose-tête, le support arrière et la bielle de connexion supportent des plaques de protection. De cette manière, le volume dédié au chargement et celui dédié au pilote et aux passagers sont nettement séparés par une cloison qui ne laisse pas passer d'objets.

Selon un autre aspect, l'invention concerne un procédé de montage d'un siège formant cloison au sein d'un véhicule comportant des sièges avant mentionné plus haut, comprenant les étapes suivantes :
- montage des sièges en assemblant au moins une bielle de connexion, un support arrière et un repose-tête,
- fixation de plaques découpées en fonction des dimensions intérieures dudit véhicule sur lesdits éléments structurels du siège,
- installation d'éléments de sellerie formés par l'assise, le dossier et le repose-tête sur le siège,
- installation d'éléments de fixation des articulations avant de la bielle de connexion sur le véhicule, derrière les sièges avant dudit véhicule,
- installation d'éléments de fixation des articulations au plafond du véhicule,
- montage d'au moins un siège pré-assemblé sur les éléments de fixation d'articulations avant sur le plancher et supérieures au plafond du véhicule.

Ce procédé qui vient d'être décrit permet de fabriquer des éléments structurels et de sellerie de sièges, communs à plusieurs véhicules. Ce procédé permet en outre de réduire les investissements nécessaires pour l'adaptation des modules de sièges et cloison, à chaque véhicule. Enfin, un ensemble permettant à plus de deux personnes de s'asseoir étant relativement lourd, chaque module de siège et cloison est monté séparément dans le véhicule, ce qui facilite la manipulation.

### 5. Liste des figures

D'autres caractéristiques et avantages de l'invention apparaîtront maintenant avec plus de détails dans le cadre de la description qui suit d'exemples de réalisation donnés à titre illustratif et non-limitatif en se référant aux figures annexées qui représentent :
- la figure 1 présente un schéma du siège en position assise pour la mise en oeuvre d'un exemple préféré de réalisation de l'invention,
- la figure 2 illustre un schéma d'un siège ou une banquette en position assise pour la mise en oeuvre d'une variante de réalisation de l'invention,
- la figure 3 présente le même siège au début de son pliage,
- la figure 4 présente le même siège au milieu de son pliage,
- la figure 5 présente le même siège vers la fin de son pliage,
- la figure 6 présente le même siège en position pliée,
- la figure 7 présente le siège en position assise et pliée ainsi que le siège avant, selon un exemple de disposition dans un véhicule,
- la figure 8 présente une variante de réalisation d'une rangée de sièges selon l'invention en positions assises et pliées,
- la figure 9 illustre la position « confort » disponible sur le siège selon un perfectionnement de l'invention,
- la figure 10 illustre un exemple de réalisation d'un siège qui se pose sur un plancher de cabine non plat,
- la figure 11 illustre un exemple de réalisation d'un siège dans lequel l'assise peut se désolidariser du jambage arrière,
- la figure 12 illustre une variante de réalisation d'un siège dans lequel les éléments formant la structure porteuse sont recouverts par l'arrière de plaques de protection.

### 6. Description d'un mode de réalisation de l'invention

### 6.1 Principe général

L'invention consiste en un siège articulé ou une banquette disposé dans une enceinte, telle qu'une cabine approfondie de véhicule utilitaire ou de véhicule particulier. Le siège articulé est fixé sur le sol de ladite enceinte et s'articule d'une position assise permettant à une personne de s'asseoir en une position pliée libérant un volume en partie arrière. Le siège comporte un support arrière se prolongeant vers le haut par un dossier et supportant une assise mobile, le support arrière reposant sur le sol de l'enceinte lorsque le siège est en position assise. Le siège comporte une bielle de connexion articulée avec l'extrémité inférieure du support arrière par un premier axe d'articulation, l'extrémité avant de la bielle de connexion étant articulée avec le sol de l'enceinte par un second axe d'articulation fixée sur l'extrémité avant permettant à ladite bielle de connexion de se soulever par l'arrière et de basculer vers l'avant lors du mouvement de pliage du siège. Le siège comporte un repose tête articulé dans son extrémité inférieure avec le support arrière par un troisième axe d'articulation, ledit repose tête étant articulé dans son extrémité supérieure par un quatrième axe d'articulation fixé au plafond de ladite enceinte. Selon un perfectionnement l'avant du siège est supporté par un support avant articulé sur la bielle de connexion par un axe d'articulation.

### 6.2 Description d'un mode de réalisation

La **FIG.l** illustre un schéma d'une cloison supportant au moins un siège ou une banquette en position assise selon un exemple préféré de réalisation de l'invention.

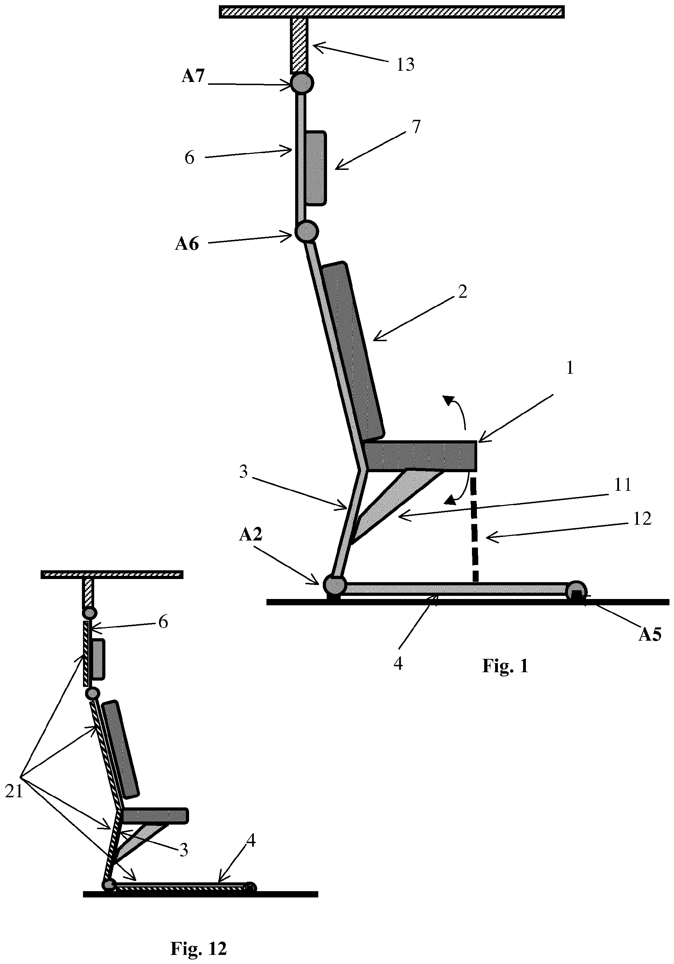

Le siège ou la banquette dispose d'une assise 1 et un dossier 2 permettant à une personne de s'asseoir dans la cabine du véhicule. Selon ce premier mode de réalisation le siège comporte un support arrière 3 du siège se prolongeant vers le haut par le dossier 2 et supportant l'assise 1 mobile, le support arrière 3 se prolonge vers le bas par un jambage arrière pour reposer sur le sol de l'enceinte lorsque le siège est en position assise. L'assise 1 est mobile en ce qu'elle est articulée sur le support arrière 3 ou escamotable par rapport au dit support. De cette façon, lorsque le siège est dans une position pliée, son assise se replie pour occuper le moins de place. Ce jambage arrière est couplé à un axe d'articulation A2 situé à l'extrémité arrière d'une bielle de connexion 4. Un « axe d'articulation » désigne tout élément apte à permettre la rotation d'une pièce autour d'un axe. Une partie au moins de cette bielle de connexion 4 repose horizontalement sur le sol de la cabine lorsque le siège est en position assise et supporte son poids et celui de la personne assise dessus. Selon un mode particulier de réalisation, seuls l'axe d'articulation entre le support arrière 3 et la bielle de connexion 4 et l'axe d'articulation à l'avant de la bielle de connexion 4 sont en contact avec le sol de la cabine. L'assise 1 est articulé autour d'un axe de rotation permettant de l'abaisser ou de le relever en position de pliage. Un jambage oblique 11 permet de bloquer l'assise à l'horizontale, selon une variante, un jambage vertical 12 représenté par un trait pointillé sur la **Fig. 1** est accroché par une extrémité à l'avant de l'assise 1 et se déploie pour que l'autre extrémité repose sur la bielle de connexion 4. L'extrémité avant de la bielle de connexion est solidarisée avec le sol de la cabine par un autre axe d'articulation A5. De cette façon, la bielle de connexion 4 peut se soulever par l'arrière, et bascule en avant en pivotant autour de l'axe d'articulation lors du mouvement de pliage du siège. L'axe d'articulation A5 est placé nettement en avant du nez de l'assise 1 permettant ainsi un faible encombrement en position pliée.

Le support arrière est articulé en partie supérieure par un autre axe d'articulation A6 avec l'extrémité inférieure d'un repose tête 6 comportant un rembourrage 7 dans sa partie inférieure. De cette manière, la personne assise sur le siège peut poser sa tête sur ledit rembourrage 7. L'élément de rembourrage 7 est éventuellement réglable en hauteur permettant ainsi à la personne qui s'assoit sur le siège de le régler en fonction de la position de sa tête.

L'extrémité supérieure du repose tête 6 est fixée au plafond de la cabine par un autre axe d'articulation A7. La fixation s'effectue soit directement sur le plafond du véhicule, soit sur une traverse haute 13 fixée au plafond et se prolongeant de chaque coté.

Comme on peut le constater selon ce premier exemple de réalisation, le siège pliable formant cloison comporte quatre axes d'articulation et n'utilise pas dans son pliage et son dépliage, de rail ou tout autre élément de translation susceptible de se bloquer. Le siège pliable selon ce premier exemple comporte 3 éléments (bielle de connexion 4, support arrière 3, repose-tête 6) articulés autour des quatre axes d'articulation suivants : A2, A5, A6, et A7.

### 6.3 Description d'une seconde variante de réalisation

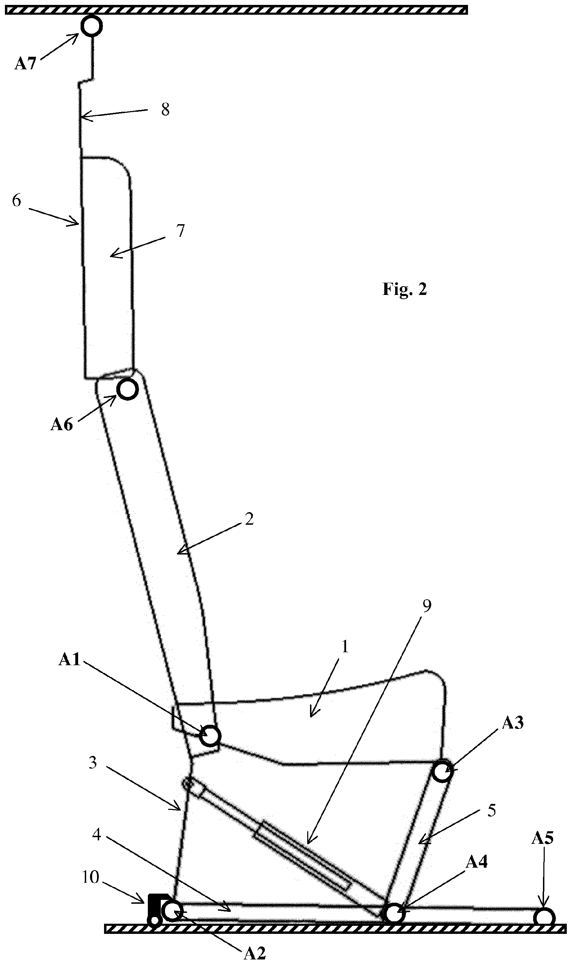

La **FIG.2** illustre un schéma d'un siège ou une banquette en position assise pour la mise en oeuvre d'une variante de réalisation de l'invention.

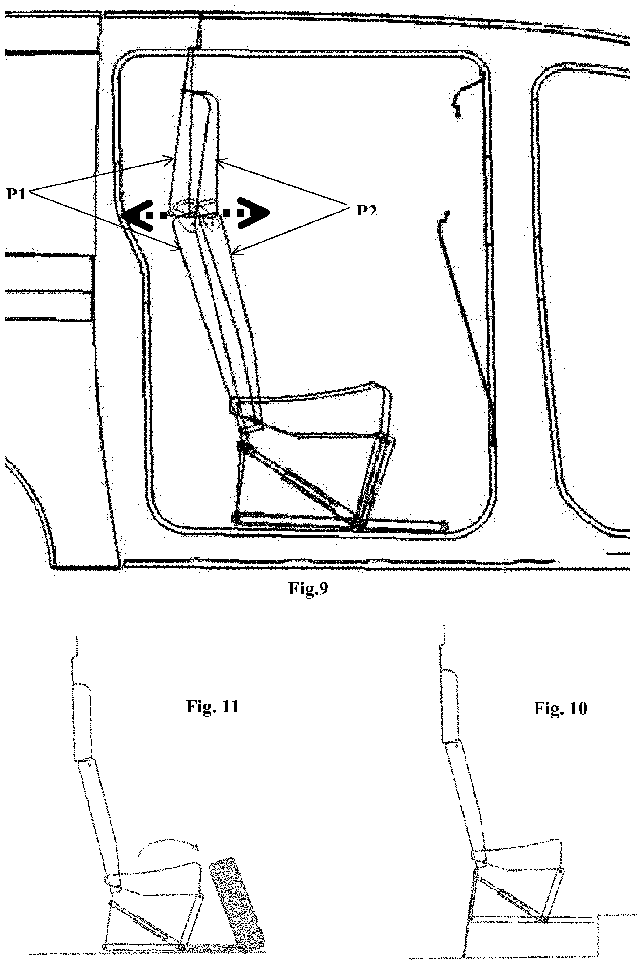

Selon ce second exemple de réalisation, le siège comporte une assise 1 et un dossier 2 qui sont articulés entre eux par un axe d'articulation A1. Comme pour la Fig. 1, le dossier 2 est solidarisé au support arrière 3, celui-ci se prolonge vers le bas par un jambage arrière. Le support arrière 3 est couplé à l'axe d'articulation A2 situé à l'extrémité arrière de la bielle de connexion 4 qui repose sur le sol de la cabine lorsque le siège est déplié. Selon une variante de réalisation illustrée par la **FIG. 10**, le jambage arrière se prolonge en dessous de l'axe d'articulation A2 et de la bielle de connexion 4 et son extrémité inférieure repose sur le fond de l'enceinte. Cette variante est notamment utile lorsque le fond du véhicule n'est pas plat et s'abaisse vers l'arrière de la cabine.

Selon ce second exemple de réalisation, l'assise 1 est maintenue à l'avant par un jambage avant 5. Le jambage avant 5 repose sur la bielle de connexion 4 et permet le transfert du poids de l'avant du siège vers le sol de la cabine. L'assise 1 et le jambage avant 5 sont articulés par un axe d'articulation A3. Le jambage avant 5 et la bielle de connexion 4 sont articulés entre eux par un axe d'articulation A4 situé approximativement au milieu de la bielle de connexion 4, entre l'axe d'articulation A2 et l'axe d'articulation A5. Comme pour la **Fig. 1****,** l'extrémité avant de la bielle de connexion est solidarisée avec le sol de la cabine par l'axe d'articulation A5. Dans le prototype réalisé pour mettre en oeuvre l'invention, la distance entre l'axe d'articulation A2 et l'axe d'articulation A4 est de 34 centimètres et la distance entre l'axe d'articulation A4 et l'axe d'articulation A5 est de 24 centimètres.

Le support arrière 3 est articulé en partie supérieure par l'axe d'articulation A6 avec l'extrémité inférieure du repose tête 6 comportant un rembourrage 7 dans sa partie inférieure et en partie supérieure, un élément de protection constitué d'une plaque métallique 8. L'élément de protection 8 isole la partie supérieure de la cabine du véhicule où les passagers se trouvent, de la partie arrière du véhicule où se trouvent les marchandises. L'élément de protection 8 empêche notamment un objet placé en hauteur en partie arrière d'être propulsé dans la cabine en cas d'une brusque décélération. Le repose tête 6 et support arrière 3 sont articulés entre eux par l'axe d'articulation A6.

Le repose tête est fixé au plafond de la cabine par l'axe d'articulation A7.

Comme on peut le constater, selon ce second exemple de réalisation, le siège pliable formant cloison comporte 5 éléments articulés (une assise 1, un support arrière 3, une bielle de connexion 4, un jambage avant 5, un repose tête 6) autour de sept axes référencés A1 à A7 sur la **Fig. 2****.**

Le centre de gravité de l'ensemble formé par ces éléments est légèrement plus haut en position pliée qu'en position assise (ou dépliée). De sorte que pour faciliter le pliage, un moyen d'assistance facilite le pliage en exerçant une force pour écarter deux axes dont la distance augmente tout au long du mouvement de pliage. C'est par exemple le cas des axes d'articulations A1 et A4. Dans l'exemple illustré par les **Fig. 2 à 6**, le moyen d'assistance est un vérin 9 qui s'articule entre le jambage arrière, à proximité de l'axe A1 et la bielle de connexion 4 à proximité de l'axe A4. Ce vérin 9 est comprimé en position assise et s'allonge en position pliée, facilitant ainsi le pliage. En variante, le moyen d'assistance facilite le pliage en exerçant une force pour rapprocher deux axes dont la distance diminue tout au long du mouvement de pliage. C'est par exemple le cas des axes d'articulations A2 et A3. Selon cette variante, un ressort peut être disposé entre la bielle de connexion 4 et le jambage avant 5. Un tel ressort est allongé en position assise et facilite le pliage lors du mouvement. D'autres moyens d'assistance qu'un vérin et un ressort sont envisageables dans le contexte de la présente invention.

Un moyen d'assistance motorisé peut également être installé dans la cabine pour positionner automatiquement chaque siège en position assise ou pliée. Ce moyen d'assistance peut être de nature électrique, pneumatique ou hydraulique selon la source de puissance disponible au niveau du véhicule. Le moyen d'assistance consiste à agir sur l'axe d'articulation A7 afin d'entraîner le repose-tête en rotation autour de cet axe ou sur l'axe d'articulation A5 afin de soulever la bielle de connexion. Les commandes individuelles de chaque siège peuvent se situer au niveau du tableau de bord, à portée de main du conducteur. Pour des raisons de sécurité, un capteur placé dans l'assise détecte la présence d'une personne sur le siège et inhibe la fonction de pliage si elle est activée par erreur. Des détecteurs de fin de course automatise le mouvement et fournisse l'information d'une position correcte du siège.

Le siège est maintenu en position assise par un mécanisme de blocage 10. Selon un exemple préféré de réalisation, ce mécanisme 10 comporte un crochet pivotant sur un axe destiné à maintenir un ergot solidarisé à l'extrémité arrière de la bielle de connexion 4. En position fermée, le crochet empêche le relevage de l'arrière de la bielle de connexion et de ce fait, le basculement du siège en avant. Selon un mode préféré de réalisation, le crochet est fixé à l'extrémité arrière de la bielle de connexion 4 et vient crocheter un ergot qui se trouve dans le sol de la cabine. De cette façon, le sol ne présente aucune aspérité lorsque le siège est en position pliée.

L'ancrage du siège sur le sol de la cabine s'effectue de façon préférée par deux points : l'axe d'articulation A5 à l'extrémité avant de la bielle de connexion 4 et le crochet 10 couplé en rotation situé à l'extrémité arrière de la bielle de connexion 4. Un capteur électrique est éventuellement disposé sur le crochet afin de détecter sa position fermée, si le capteur n'est pas dans cette position, une indication apparaît au niveau du tableau de bord pour en informer le conducteur.

Selon un perfectionnement, le repose tête 6 intègre le dérouleur de la ceinture de sécurité qui vient s'amarrer de chaque coté de l'assise 1 par des fixations.

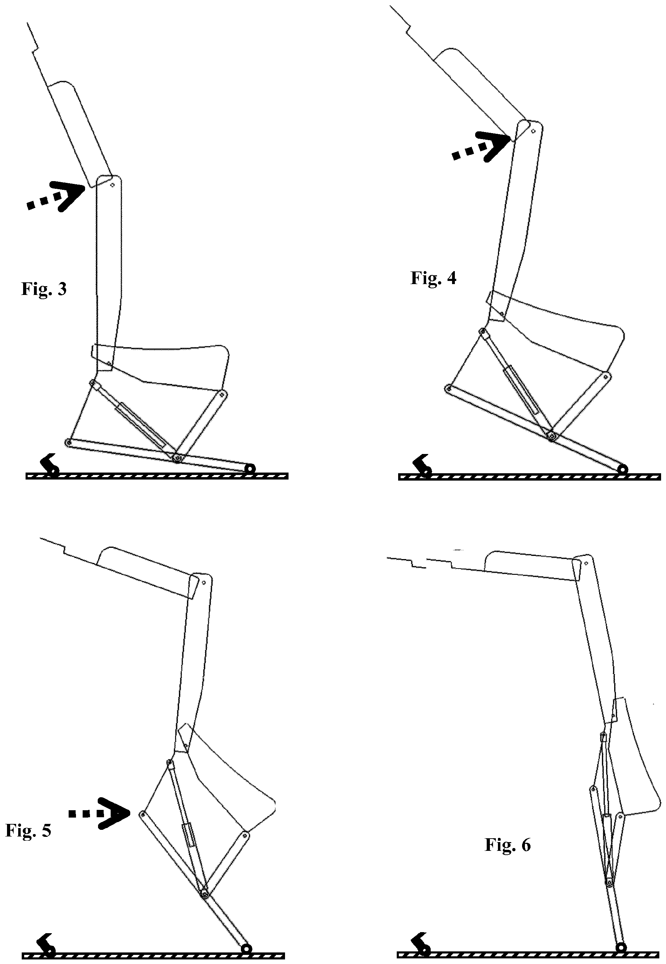

Les **FIG. 3, 4, 5 et 6** présentent la cinématique du pliage du siège selon la seconde variante de réalisation présentée à la **FIG. 2****.**

Dans un premier temps, l'opérateur débloque d'une main le crochet 10 en le basculant vers l'arrière libérant ainsi l'ergot, et de son autre main, pousse le dossier 2 vers l'avant, comme le montre la flèche en pointillé. La **FIG. 3** présente le siège au début de son pliage, l'arrière de la bielle de connexion 4 se soulevant du sol de la cabine par l'arrière.

La **FIG. 4** présente le siège au milieu du mouvement de pliage, le vérin 9 commence à s'allonger, favorisant ainsi le mouvement vers le haut du centre de gravité du siège. Le repose-tête 7 continue son mouvement de rotation autour de l'axe A7 et se rapproche du plafond de la cabine.

La **FIG. 5** présente le même siège vers la fin du mouvement de pliage. L'utilisateur exerce maintenant une pression vers l'avant au niveau du bas du jambage arrière avant d'avancer la partie basse du siège, comme le montre la flèche en pointillé.

La **FIG. 6** présente le siège en position de pliage. Le repose-tête 6 est plaqué contre le plafond de la cabine, en position quasi horizontale. Les axes d'articulation A2 et A3 sont rapprochés au maximum, et le jambage arrière 3 est placé au dessus du jambage avant 5. Dans cette position, l'assise 1, le dossier 2, le jambage arrière 3, la bielle de connexion 4, et le jambage avant 5 se positionnent verticalement afin de libérer un maximum de volume vers l'arrière. Dans cette position pliée, l'opérateur bloque le siège par un second mécanisme de blocage qui verrouille l'articulation A1. Le placement de l'axe d'articulation A5 nettement en avant de l'axe A4 permet de disposer assez haut le siège en position pliée et de limiter l'encombrement de la cloison ainsi formée.

Selon l'exemple de réalisation illustré par les **FIG. 2** à **6****,** les articulations associées à chaque axe A1 à A7 autorisent une amplitude de rotation d'une certaine valeur. Le tableau ci-dessous présente pour chaque axe d'articulation les éléments suivants :
- valeurs d'angle de départ (en position assise),
- valeurs d'arrivée (en position pliée),
- l'amplitude du mouvement de rotation.

| Axe | A1 | A2 | A3 | A4 | A5 | A6 | A7 |
|---|---|---|---|---|---|---|---|
| Angle départ | 103,2 | 83,4 | 79,2 | 72,6 | 0,9 | 181,2 | 85,5 |
| Angle d'arrivée | 188,6 | 9,2 | 195,4 | 177,6 | 79,5 | 92,9 | 1,5 |
| Amplitude | 92,9 | 82,3 | 131,6 | 116,7 | 78,6 | 92,6 | 84,0 |

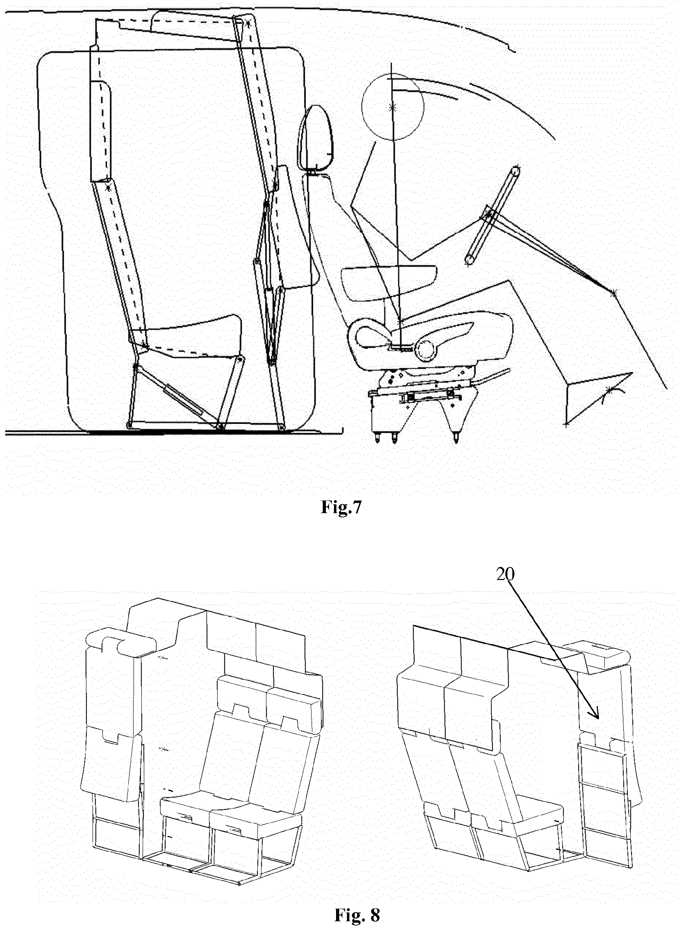

La **FIG. 7** présente le siège dans la position dépliée (celle permettant à quelqu'un de s'assoir) et la position pliée. En position dépliée, un passager dispose de suffisamment de place pour s'asseoir et glisser ses jambes entre l'assise 1 et le siège de devant. En position pliée, on peut constater que l'assise 1 vient se plaquer contre le dossier du siège avant, et que la partie inférieure du dossier 2 vient quasiment toucher le repose-tête du siège avant. La **FIG. 7** montre la compacité du siège en position pliée.

### 6.4 Description d'une troisième variante de réalisation

La **FIG. 8** présente une troisième variante de réalisation d'une rangée de sièges selon l'invention en positions assises et pliées. Selon un exemple préféré de réalisation, le jambage arrière 3, la bielle de connexion 4 et le jambage avant 5 sont constitués de plaques s'étendant sur toute la largeur du siège. Ces plaques sont articulées par des axes (A1, A2, A3, A4 et A5)) s'étendant sur toute la largeur de l'élément. Cette disposition confère à l'ensemble une plus grande solidité à la torsion. De plus, comme on ne voit sur le dessin de droite, le siège en position pliée présente à l'arrière une surface verticale fermée et lorsque l'ensemble des sièges de la rangée sont pliés, une véritable paroi sépare la partie conducteur de la cabine de la partie transport de marchandises. Cette variante est particulièrement apprécié pour le transport de petits animaux, car ceux-ci ne peuvent en aucun cas pénétrer dans la partie dédiée à la conduite. Cette caractéristique n'est possible que si tous les sièges sont dans la même position. Une variante de réalisation consiste à utiliser des tiges métalliques placées de part et d'autres du siège ou de la banquette pour réaliser les jambages et la bielle de connexion.

Dans l'exemple illustré par la **FIG. 8****,** le véhicule comporte une rangée de trois sièges à l'arrière. L'opérateur peut en plier un, deux ou les trois afin d'adapter le volume en fonction du nombre de passagers et son besoin en volume utile pour le chargement. De nombreuses configurations de sièges et banquettes sont possibles dans le cadre de cette invention : une seule banquette, deux demi banquettes de 1 et/ou 2 places, 3 ou 4 sièges individuels. Ainsi, l'espace dégagé entre un siège déployé et un siège adjacent plié peut être protégé par un filet ou une paroi amovible, afin d'éviter toute chute ou déplacement latéral d'une charge dans la zone des passagers assis.

Comme on peut le constater sur la **FIG. 8****,** quelque soit la position du siège, il ferme l'espace jusqu'en haut de la cabine et occulte la vision du conducteur à travers le rétroviseur intérieur. Selon un perfectionnement, une surface transparente est disposée dans le dossier 1 et/ou dans le repose-tête 6, au moins sur le siège situé au milieu de la rangée. Si la rangée arrière ne dispose que de deux sièges de largeur égale alors ils sont tous deux équipés de surface transparente. Si la rangée arrière comporte deux sièges occupant respectivement une largeur d'un tiers et de deux tiers, la surface transparente peut être disposée sur le siège ayant la largeur des deux tiers et en position centrale de la cabine.

Cette surface transparente peut être constituée d'une vitre en plastique au niveau du repose tête 6. Cette surface devient un volume au niveau du dossier 1 et peut être constitué d'un coussin en plastique transparent rempli d'air. Les positions des deux surfaces transparentes au niveau du repose tête 6 et du dossier 1 sont déterminées de façon que les centres de ces surfaces sont approximativement situés sur l'axe entre le rétroviseur central et la vitre arrière du véhicule.

Selon un perfectionnement illustré par la **FIG. 9****,** le dossier 2 du siège dispose d'au moins deux inclinaisons en position assise, le dossier étant un peu plus incliné vers l'arrière dans une position dite « confort ». La variation d'inclinaison s'effectue à l'aide d'un verrouillage par cran bloquant la rotation de l'articulation A6 selon au moins deux valeurs d'angle. L'angle entre le dossier et le repose tête varie de 6° pour le prototype réalisé et l'axe A6 se déplace de 88 millimètres. L'amplitude de la rotation des autres axes est nettement inférieure et peut s'effectuer à l'aide des différents jeux. Comme le montre la figure, en position P1 dite « confort », le dossier du siège est légèrement incliné vers l'arrière. En position P2, le dossier est un peu plus relevé permettant un chargement optimum à l'arrière tout en autorisant une personne à s'asseoir sur le siège.

Selon une variante de réalisation illustré par la **FIG. 11**, l'axe d'articulation A1 est conçu pour être désolidarisé de façon à écarter l'assise 1 du jambage arrière 3 lorsque le siège est en position assise. La désolidarisation s'effectue par exemple en déverrouillant l'axe A1. L'assise 1 peut alors se déplacer vers l'avant du véhicule et se plier sur le jambage avant 5 tout en s'abaissant. Ainsi, un volume de chargement peut être dégagé derrière les sièges avant, ce volume ne faisant pas partie du volume arrière.

Selon une variante de réalisation, la bielle de connexion 4 forme un plan s'étendant sur toute la largeur du siège et constitue un plancher lorsque le siège est en position assise. De ce fait, la personne assise pose ses pieds sur un plancher qui fait partie de la cabine et n'est pas en contact avec le chargement disposé en partie arrière du véhicule.

Selon cette variante, l'ensemble formé par le support arrière 3 et la bielle de connexion 4 constitue en position pliée une première cloison. En position dépliée (siège en position assise), l'ensemble formé par le support arrière 3 et le repose tête 6 constitue une seconde cloison qui est en arrière par rapport à la première. Comme on peut le voir en partie droite de la figure 7, cette première cloison 20 est quasi verticale et sépare l'enceinte en deux parties : un volume dédié au chargement et un volume à usage d'habitacle.

Selon un perfectionnement, les éléments mobiles tels que les bielles de connexion 4, les supports arrières 3 et les repose-tête 6, articulés entre eux par les axes A2, A5, A6 et A7 et formant la structure porteuse du siège, sont des éléments standards communs à plusieurs véhicules de différentes tailles. Selon un perfectionnement illustré par la **Fig. 12****,** les éléments formant la structure porteuse sont recouverts par l'arrière de plaques de protection 21. Pour constituer une cloison séparant nettement la partie habitacle de la zone de chargement, ces éléments sont recouverts par des plaques découpées fixées sur les faces tournées vers l'arrière du véhicule. Ces plaques sont découpées en fonction de chaque véhicule de façon que, tant en position pliée qu'en position dépliée (siège en position assise), l'ensemble des plaques forme une cloison plane s'étendant jusqu'au sol, plafond et cotés de la cabine. Les interstices entre les différentes plaques et le sol, plafond et cotés du véhicule sont inférieures à 40 millimètres conformément à la réglementation en vigueur. De cette façon, le volume de chargement, derrière cette cloison, est bien isolé de la partie avant dédiée à l'habitacle et de petits objets ne peuvent passer d'une partie à l'autre.

La présente invention concerne un procédé de montage consistant à équiper dans un véhicule déterminé un siège articulé formant cloison en position pliée, et à fixer sur les faces arrières de la bielle de connexion, du support arrière et du repose-tête, des plaques découpées en fonction des dimensions intérieures dudit véhicule, le découpage des plaques laissant un interstice avec les parois du véhicule inférieur à un seuil déterminé, par exemple 40 millimètres.

Le système d'articulation décrit précédemment assure une grande solidité de la cloison 20 en contenant les marchandises qui peuvent être propulsé vers l'avant en cas de choc. La cloison 20 peut être équipée du coté de l'habitacle par d'autres éléments qu'un siège ou une banquette, par exemple des tiroirs, des placards, une penderie, ... La cloison peut également être équipée d'une portion de paroi fixe pour compléter l'étanchéité adaptée simplement à chaque véhicule, placée sur le coté opposé à la porte latérale coulissante, et des volets rabattables fixés sur le siège adjacent à ladite porte, placés sur le coté pour réaliser une étanchéité avec cette porte.

Bien que la présente invention ait été décrite en référence aux modes de réalisation particuliers illustrés, celle-ci n'est nullement limitée par ces modes de réalisation, mais ne l'est que par les revendications annexées. On notera que des changements ou des modifications pourront être apportés par l'Homme du métier.

## Revendications

1. Siège articulé disposé dans une enceinte, telle qu'une cabine de véhicule utilitaire, fixé sur le sol de ladite enceinte, ledit siège comportant au moins un support arrière (3) se prolongeant vers le haut par un dossier (2) et supportant une assise (1) mobile, le support arrière reposant sur le sol de l'enceinte lorsque le siège est en position assise, une bielle de connexion (4) articulée avec l'extrémité inférieure du support arrière (3) par un premier axe d'articulation (A2), l'extrémité avant de la bielle de connexion (4) étant articulée avec le sol de l'enceinte par un second axe d'articulation (A5) fixée sur l'extrémité avant permettant à ladite bielle de connexion (4) de se soulever par l'arrière et de basculer vers l'avant lors du mouvement de pliage du siège, un repose tête (6) articulé dans son extrémité inférieure avec l'extrémité supérieure du support arrière (3) par un troisième axe d'articulation (A6), ledit repose tête (6) étant articulé dans son extrémité supérieure par un quatrième axe d'articulation (A7) fixé au plafond de ladite enceinte, **caractérisé par** l'assise étant articulée avec le support arrière (3) par un cinquième axe d'articulation (A1) situé sur le support arrière (3) entre le premier axe d'articulation (A2) et le troisième axe d'articulation (A6).

2. Siège articulé selon la revendication 1, **caractérisé en ce que** l'assise (1) est également supportée par au moins un support avant (5) fixé sur ladite bielle de connexion (4), l'assise (1) étant articulée avec le support avant (5) par un sixième axe d'articulation (A3), le support avant (5) étant articulé avec la bielle de connexion (4) par un septième axe d'articulation (A4) situé entre le premier axe d'articulation (A2), et le second axe d'articulation (A5).

3. Siège articulé selon la revendication 1 ou 2, **caractérisé en ce que** la bielle de connexion (4) repose sur le fond plat de l'enceinte, lorsque ledit siège se trouve en position assise.

4. Siège articulé selon l'une quelconque des revendications précédentes, **caractérisé en ce que** le support arrière (3) se prolonge en dessous de la bielle de connexion (4).

5. Siège articulé selon l'une quelconque des revendications précédentes, **caractérisé en ce que** le dossier (1) comporte une surface transparente, une partie au moins de cette surface transparente étant située sur l'axe entre le rétroviseur central et la vitre arrière du véhicule, lorsque le siège est en position pliée.

6. Siège articulé selon l'une quelconque des revendications 1 à 4, **caractérisé en ce que** le repose tête (6) comporte une surface transparente, une partie au moins de cette surface transparente étant située sur l'axe entre le rétroviseur central et la vitre arrière du véhicule, lorsque le siège est en position assise.

7. Siège articulé selon l'une quelconque des revendications précédentes, **caractérisé en ce que** ledit siège comporte un moyen d'assistance destiné à faciliter le pliage du siège.

8. Siège articulé selon la revendication 7, **caractérisé en ce que** ledit moyen d'assistance exerce une force destinée à rapprocher l'axe (A2) articulant le support arrière (3) et la bielle de connexion (4), et l'axe (A3) articulant l'assise (1) mobile et le support avant (5).

9. Siège articulé selon la revendication 7, **caractérisé en ce que** ledit moyen d'assistance exerce une force pour basculer le repose tête (6) vers l'avant permettant ainsi de le rapprocher du plafond de l'enceinte.

10. Siège articulé selon l'une quelconque des revendications précédentes, **caractérisé en ce qu'**il comporte un moyen d'assistance motorisé destiné à modifier la position des articulations pour placer le siège dans des positions assises et pliées.

11. Siège articulé selon la revendication 10, **caractérisé en ce que** le dit moyen d'assistance motorisé agit sur l'axe (A7) pour animer en rotation le repose tête (6) et le rapprocher du plafond de l'enceinte.

12. Siège articulé selon l'une quelconque des revendications précédentes, **caractérisé en ce que** le dossier (2) du siège dispose d'au moins deux inclinaisons en position assise, la variation d'inclinaison s'effectuant à l'aide d'un verrouillage par cran bloquant la rotation de l'axe (A6) articulant le repose tête (6) et le dossier (2).

13. Siège articulé selon l'une quelconque des revendications précédentes, **caractérisé en ce que** la bielle de connexion (4) forme un plan s'étendant sur toute la largeur du siège et constitue un plancher lorsque le siège est en position assise.

14. Siège articulé selon l'une quelconque des revendications précédentes, **caractérisé en ce que** l'ensemble formé par le repose tête (6) et le support arrière (3) constituant une première cloison séparant l'enceinte en deux parties lorsque le siège est en position assise et l'ensemble formé par le support arrière (3) et la bielle de connexion (4) constituant une seconde cloison (20) séparant l'enceinte en deux parties lorsque le siège est en position pliée.

15. Siège articulé selon l'une quelconque des revendications précédentes, **caractérisé en ce que** le cinquième axe d'articulation (A1) est conçu pour être désolidarisé de façon à écarter l'assise (1) mobile du support arrière (3) permettant à l'assise (1) de se plier sur le jambage avant (5) lorsque le siège est en position assise.

16. Siège articulé selon l'une quelconque des revendications précédentes, **caractérisé en ce que** le repose-tête (6), le support arrière (3) et la bielle de connexion (4) supportent des plaques (21) de protection amovibles.

17. Procédé de montage d'un siège selon la revendication 16 formant cloison au sein d'un véhicule comportant des sièges avant, comprenant les étapes suivantes :
- montage d'au moins un siège en assemblant lesdites bielles de connexion (4), ledit support arrière (3) et ledit repose-tête (6),
- fixation desdites plaques (21) découpées en fonction des dimensions intérieures dudit véhicule sur lesdits éléments structurels du siège,
- installation d'éléments de sellerie formés par l'assise (1), le dossier (2) et le repose-tête (7) sur le siège,
- installation d'éléments de fixation des articulations avant de la bielle de connexion (4) sur le véhicule, derrière les sièges avant dudit véhicule,
- installation d'éléments de fixation des articulations au plafond du véhicule,
- montage d'au moins un siège assemblé sur les éléments de fixation d'articulations avant (A5) sur le plancher et supérieures (A7) au plafond du véhicule.

## Patentansprüche

1. Gelenkiger Sitz, welcher in einem abgeschlossenen Raum, wie beispielsweise einer Kabine eines Nutzfahrzeugs, angeordnet ist, welcher am Boden des abgeschlossenen Raums befestigt ist, wobei der Sitz umfasst
mindestens einen hinteren Träger (3), welcher sich durch eine Rückenlehne (2) nach oben erstreckt und eine bewegliche Sitzfläche (1) hält, wobei der hintere Träger auf dem Boden des abgeschlossenen Raums ruht, wenn sich der Sitz in der Sitzstellung befindet, eine Verbindungsstange (4), welche mit dem unteren Ende des hinteren Trägers (3) durch einen ersten Gelenkstift (A2) gelenkig verbunden ist, wobei das vordere Ende der Verbindungsstange (4) mit dem Boden des abgeschlossenen Raums durch einen zweiten Gelenkstift (A5) gelenkig verbunden ist, welcher an dem vorderen Ende befestigt ist, was es der Verbindungsstange (4) ermöglicht, sich bei der Klappbewegung des Sitzes von hinten zu erheben und nach vorne zu kippen, eine Kopfstütze (6), welche an ihrem unteren Ende mit dem oberen Ende des hinteren Trägers (3) durch einen dritten Gelenkstift (A6) gelenkig verbunden ist, wobei die Kopfstütze (6) an ihrem oberen Ende durch einen vierten Gelenkstift (A7), welcher an der Decke des abgeschlossenen Raums befestigt ist, gelenkig verbunden ist,
**dadurch gekennzeichnet, dass** die Sitzfläche mit dem hinteren Träger (3) durch einen fünften Gelenkstift (A1), welcher sich an dem hinteren Träger zwischen dem ersten Gelenkstift (A2) und dem dritten Gelenkstift (A6) befindet, gelenkig verbunden ist.

2. Gelenkiger Sitz nach Anspruch 1, **dadurch gekennzeichnet, dass** die Sitzfläche (1) ebenfalls von mindestens einem an der Verbindungsstange (4) befestigten vorderen Träger (5) gehalten wird, wobei die Sitzfläche (1) mit dem vorderen Träger (5) durch einen sechsten Gelenkstift (A3) verbunden ist, wobei der vordere Träger (5) mit der Verbindungsstange (4) durch einen siebten Gelenkstift (A4), welcher sich zwischen dem ersten Gelenkstift (A2) und dem zweiten Gelenkstift (A5) befindet, gelenkig verbunden ist.

3. Gelenkiger Sitz nach Anspruch 1 oder 2, **dadurch gekennzeichnet, dass** die Verbindungsstange (4) auf dem ebenen Boden des abgeschlossenen Raums ruht, wenn sich der Sitz in Sitzstellung befindet.

4. Gelenkiger Sitz nach einem der vorhergehenden Ansprüche, **dadurch gekennzeichnet, dass** sich der hintere Träger (3) unter der Verbindungsstange (4) erstreckt.

5. Gelenkiger Sitz nach einem der vorhergehenden Ansprüche, **dadurch gekennzeichnet, dass** die Rückenlehne (1) eine transparente Fläche umfasst, wobei sich wenigstens ein Teil dieser transparenten Fläche auf der Achse zwischen dem zentralen Rückspiegel und der Heckscheibe des Fahrzeugs befindet, wenn sich der Sitz in der zusammengeklappten Stellung befindet.

6. Gelenkiger Sitz nach einem der Ansprüche 1 bis 4, **dadurch gekennzeichnet, dass** die Kopfstütze (6) eine transparente Fläche umfasst, wobei sich wenigstens ein Teil dieser transparenten Fläche auf der Achse zwischen dem zentralen Rückspiegel und der Heckscheibe des Fahrzeugs befindet, wenn sich der Sitz in der Sitzstellung befindet.

7. Gelenkiger Sitz nach einem der vorhergehenden Ansprüche, **dadurch gekennzeichnet, dass** der Sitz ein Unterstützungsmittel umfasst, welches dafür vorgesehen ist, das Zusammenklappen des Sitzes zu erleichtern.

8. Gelenkiger Sitz nach Anspruch 7, **dadurch gekennzeichnet, dass** das Unterstützungsmittel eine Kraft ausübt, welche dafür vorgesehen ist, den den hinteren Träger (3) und die Verbindungsstange (4) gelenkig verbindenden Stift (A2) und den die bewegliche Sitzfläche (1) und den vorderen Träger (5) gelenkig verbindenden Stift (A3) näher zu bringen.

9. Gelenkiger Sitz nach Anspruch 7, **dadurch gekennzeichnet, dass** das Unterstützungsmittel eine Kraft ausübt, um die Kopfstütze (6) nach vorne zu kippen, wodurch so ermöglicht wird, sie der Decke des abgeschlossenen Raums näher zu bringen.

10. Gelenkiger Sitz nach einem der vorhergehenden Ansprüche, **dadurch gekennzeichnet, dass** er ein motorisiertes Unterstützungsmittel umfasst, welches dafür vorgesehen ist, um die Position der Gelenke zu verändern, um den Sitz in die Sitz- und zusammengeklappte Stellung zu bringen.

11. Gelenkiger Sitz nach Anspruch 10, **dadurch gekennzeichnet, dass** das motorisierte Unterstützungsmittel auf den Stift (A7) einwirkt, um die Kopfstütze (6) in Drehung zu versetzen und sie der Decke des abgeschlossenen Raums näher zu bringen.

12. Gelenkiger Sitz nach einem der vorhergehenden Ansprüche, **dadurch gekennzeichnet, dass** die Rückenlehne (2) des Sitzes über mindestens zwei Neigungen in Sitzstellung verfügt, wobei die Neigungsänderung mit Hilfe einer Rastverriegelung erfolgt, welche die Drehung des Stifts (A6), welcher die Kopfstütze (6) gelenkig verbindet, blockiert.

13. Gelenkiger Sitz nach einem der vorhergehenden Ansprüche, **dadurch gekennzeichnet, dass** die Verbindungsstange (4) eine Ebene bildet, welche sich über die gesamte Breite des Sitzes erstreckt und einen Boden darstellt, wenn sich der Sitz in Sitzstellung befindet.

14. Gelenkiger Sitz nach einem der vorhergehenden Ansprüche, **dadurch gekennzeichnet, dass** die Baugruppe, welche aus der Kopfstütze (6) und dem hinteren Träger (3) gebildet wird, eine erste Trennwand darstellt, welche den abgeschlossenen Raum in zwei Teile unterteilt, wenn sich der Sitz in Sitzstellung befindet, und die Baugruppe, welche aus dem hinteren Träger (3) und der Verbindungsstange (4) gebildet wird, eine zweite Trennwand (20) darstellt, welche den abgeschlossenen Raum in zwei Teile unterteilt, wenn sich der Sitz in zusammengeklappter Stellung befindet.

15. Gelenkiger Sitz nach einem der vorhergehenden Ansprüche, **dadurch gekennzeichnet, dass** der fünfte Gelenkstift (A1) dafür ausgelegt ist, um gelöst zu werden, so dass die bewegliche Sitzfläche (1) von dem hinteren Träger (3) weggerückt wird, was es der Sitzfläche (1) ermöglicht, über den vorderen Fuß (5) klappbar zu sein, wenn sich der Sitz in Sitzstellung befindet

16. Gelenkiger Sitz nach einem der vorhergehenden Ansprüche, **dadurch gekennzeichnet, dass** die Kopfstütze (6), der hintere Träger (3) und die Verbindungsstange (4) bewegliche Schutzplatten (21) tragen.

17. Verfahren zur Montage eines Sitzes nach Anspruch 16, welcher eine Trennwand im Inneren eines Fahrzeugs bildet, welches Vordersitze umfasst, aufweisend die folgenden Schritte:
- Montage mindestens eines Sitzes, indem die Verbindungsstangen (4), der hintere Träger (3) und die Kopfstütze (6) zusammengebaut werden,
- Befestigung der Platten (21), welche in Abhängigkeit der Innenabmessungen des Fahrzeugs zugeschnitten sind, an den strukturellen Elementen des Sitzes,
- Installation von Sattlereielementen an dem Sitz, welche von der Sitzfläche (1), der Rückenlehne (2) und der Kopfstütze (7) gebildet werden,
- Installation von Elementen zur Befestigung von vorderen Gelenken der Verbindungsstange (4) an dem Fahrzeug hinter den Vordersitzen des Fahrzeugs,
- Installation von Elementen zur Befestigung von Gelenken an der Decke des Fahrzeugs,
Montage mindestens eines Sitzes, welcher an den Elementen zur Befestigung von vorderen Gelenken (A5) auf dem Boden und oberen (A7) an der Decke des Fahrzeugs zusammengebaut ist.

## Claims

1. Hinged seat arranged in a chamber, such as a utility vehicle cabin, fixed on the floor of said chamber, said seat comprising at least one rear support (3) extending towards the top by a backrest (2) and supporting a mobile base (1), the rear support resting on the floor of the chamber when the seat is in the seated position, a connecting rod (4) hinged with the lower end of the rear support (3) through a first joint axis (A2), the front end of the connecting rod (4) being hinged with the floor of the chamber through a second joint axis (A5) fixed on the front end, enabling said connecting rod (4) to be raised by the rear and to tilt towards the front during the folding movement of the seat, a headrest (6) hinged in the lower end thereof with the upper end of the rear support (3) through a third joint axis (A6), said headrest (6) being hinged in the upper end thereof by a fourth joint axis (A7) fixed to the ceiling of said chamber, **characterised by** the base being hinged with the rear support (3) through a fifth joint axis (A1) situated on the rear support (3) between the first joint axis (A2) and the third joint axis (A6).

2. Hinged seat according to claim 1, **characterised in that** the base (1) is also supported by at least one front support (5) fixed on said connecting rod (4), the base (1) being hinged with the front support (5) through a sixth joint axis (A3), the front support (5) being hinged with the connecting rod (4) through a seventh joint axis (A4) situated between the first joint axis (A2) and the second joint axis (A5).

3. Hinged seat according to claim 1 or 2, **characterised in that** the connecting rod (4) rests on the flat base of the chamber, when said seat is in the seated position.

4. Hinged seat according to any one of the preceding claims, **characterised in that** the rear support (3) is extended below the connecting rod (4).

5. Hinged seat according to any one of the preceding claims, **characterised in that** the backrest (1) comprises a transparent surface, at least one part of this transparent surface being situated on the axis between the rear-view mirror and the rear window of the vehicle, when the seat is in the folded position.

6. Hinged seat according to any one of claims 1 to 4, **characterised in that** the headrest (6) comprises a transparent surface, at least one part of this transparent surface being situated on the axis between the rear-view mirror and the rear window of the vehicle, when the seat is in the seated position.

7. Hinged seat according to any one of the preceding claims, **characterised in that** said seat comprises an assistance means intended to facilitate the folding of the seat.

8. Hinged seat according to claim 7, **characterised in that** said assistance means exert a force intended to bring closer together the axis (A2) that hinges the rear support (3) and the connecting rod (4), and the axis (A3) that hinges the mobile base (1) and the front support (5).

9. Hinged seat according to claim 7, **characterised in that** said assistance means exert a force to tilt the headrest (6) towards the front, thus enabling it to be brought closer to the ceiling of the chamber.

10. Hinged seat according to any one of the preceding claims, **characterised in that** it comprises a motorised assistance means intended to modify the positions of the axis to position the seat in the seated and folded positions.

11. Hinged seat according to claim 10, **characterised in that** said motorised assistance means act on the axis (A7) to rotate the headrest (6) and bring it closer to the ceiling of the chamber.

12. Hinged seat according to any one of the preceding claims, **characterised in that** the backrest (2) of the seat has at least two inclination in the seated position, the inclination variation being made using notch-locking, blocking the rotation of the axis (A6) that hinges the headrest (6) and the backrest (2).

13. Hinged seat according to any one of the preceding claims, **characterised in that** the connecting rod (4) forms a plane extending over the whole width of the seat and constitutes a floor when the seat is in the seated position.

14. Hinged seat according to any one of the preceding claims, **characterised in that** the unit formed by the headrest (6) and the rear support (3) constituting a first partition splitting the chamber into two parts when the seat is in the seated position and the unit formed by the rear support (3) and the connecting rod (4) constituting a second partition (20), splittes the chamber into two parts when the seat is in the folded position.

15. Hinged seat according to any one of the preceding claims, **characterised in that** the fifth joint axis (A1) is designed to be disconnected so as to distance the mobile base (1) from the rear support (3), enabling the base (1) to be folded over the front jamb (5) when the seat is in the seated position.

16. Hinged seat according to any one of the preceding claims, **characterised in that** the headrest (6), the rear support (3) and the connecting rod (4) support removable protective plates (21).

17. Method for assembling a seat according to claim 16 forming a partition within the vehicle comprising front seats, comprising the following steps:
- assembling at least one seat by assembling said connecting rods (4), said rear support (3) and said headrest (6),
- fixing said plates (21), cut according to the internal sizes of said vehicle on said structural elements of the seat,
- installing saddlery elements formed by the base (1), the backrest (2) and the headrest (7) on the seat,
- installing front hinge fixing elements of the connecting rod (4) on the vehicle, behind the front seats of said vehicle,
- installing hinge fixing elements to the ceiling of the vehicle,
- assembling at least one assembled seat on the front hinge (A5) fixing elements on the floor and upper hinge (A7) fixing element to the ceiling of the vehicle.
